(19) Europäisches Patentamt
European Patent Office
Office européen des brevets

(11) EP 4 722 080 A1

(12) EUROPEAN PATENT APPLICATION
published in accordance with Art. 153(4) EPC

(43) Date of publication:
08.04.2026 Bulletin 2026/15

(51) International Patent Classification (IPC):
B62D 6/00 (2006.01)     B62D 101/00 (2006.01)
B62D 113/00 (2006.01)    B62D 119/00 (2006.01)

(21) Application number: 23938521.4

(22) Date of filing: 25.05.2023

(52) Cooperative Patent Classification (CPC):
B62D 5/0463; B62D 6/008; B62D 6/02

(86) International application number:
PCT/JP2023/019435

(87) International publication number:
WO 2024/241558 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Mitsubishi Electric Mobility
Corporation
Tokyo 100-8310 (JP)

(72) Inventors:
• KIMURA, Mitsuharu
  Tokyo 100-8310 (JP)
• TODA, Taizo
  Tokyo 100-8310 (JP)
• MATSUSHITA, Masaki
  Tokyo 100-8310 (JP)

(74) Representative: Hoffmann Eitle
Patent- und Rechtsanwälte PartmbB
Arabellastraße 30
81925 München (DE)

(54) STEERING CONTROL DEVICE, ELECTRIC POWER STEERING DEVICE, AND VEHICLE

(57) A steering control device (11) includes a target steering torque setter (22) configured to set a target steering torque with respect to a steering system, and a steering torque controller (23) configured to control a steering assist torque required to cause a steering torque to follow the target steering torque based on a deviation between the target steering torque and the steering torque acting on the steering system, in which the target steering torque setter sets the target steering torque based on the steering torque and the steering assist torque when a vehicle is in a stopped state, the target steering torque based on the steering torque, the steering assist torque, a steering angle of the steering system, and a vehicle speed in a first vehicle speed range, and the target steering torque based on the steering angle and the vehicle speed in a second vehicle speed range.

FIG. 2

EP 4 722 080 A1

## Description

Technical Field

The present disclosure relates to a steering control device, an electric power steering device, and a vehicle.

Background Art

An electric power steering device includes a motor generating a steering assist torque with respect to a steering and a steering control device controlling the motor, and applies a steering assist force to a steering mechanism of a vehicle such as an automobile. Such an electric power steering device has an advantage of being lighter and more compact compared to a hydraulic power steering device.

Patent Document 1 below discloses an electric power steering device capable of easily achieving a steering torque equivalent to vehicle driving information such as a steering angle without being affected by changes in mechanical characteristics due to road conditions or aging deterioration of the steering mechanism. This electric power steering device generates a target steering torque based on the vehicle driving information, converts the generated target steering torque into a target torsional angle, obtains a target torsional angular velocity according to a deviation between the target torsional angle and the detected torsional angle, and performs control so that the torsional angular velocity follows the target torsional angular velocity.

Patent Document 2 below discloses an electric power steering device realizing a torque feedback system with a simple configuration without employing a configuration in which a target steering torque is determined based on a steering angle and a vehicle speed. This electric power steering device calculates an output-side torque as a sum of a detected torque and an assist torque, and obtains a target steering torque from the output-side torque based on predefined relationship information between the output-side torque and the target steering torque.

Citation List

Patent Document

Patent Document 1: Japanese Patent No. 6504322
Patent Document 2: Japanese Patent No. 4161707

Summary of Invention

Problem to be Solved by the Invention

Incidentally, in the electric power steering device disclosed in the above-described Patent Document 1, the target steering torque is determined using a basic map, a damper component, and a hysteresis component. Therefore, when the vehicle speed is in a state of 0 [km/h] (stopped state) and the steering angle is other than 0 [deg] (neutral position), if a driver releases the steering wheel (so-called handle), the steering wheel will try to return to the neutral position, resulting in behavior that is unintended by the driver. Also, when a road surface friction is greater than or equal to the assist torque, the steering wheel will not move, but in the electric power steering device disclosed in the above-described Patent Document 1, the target steering torque according to the steering angle will continue to be output. There is a problem in that a current continues to flow as the steering torque tries to follow the target steering torque, resulting in unnecessary power consumption. In addition, if the vehicle is left in that state for a long period of time during idling, there is a possibility that the motor may overheat and enter an overheat protection state, resulting in reduced performance.

In the electric power steering device disclosed in the above-described Patent Document 2, the target steering torque is determined only by the output-side torque (sum of the detected torque and the assist torque) acting on the wheel side. Therefore, when a road surface reaction torque is or less than or equal to a mechanical friction torque, the target steering torque becomes zero, and no assist torque acting in a direction of returning the steering wheel is generated. That is, the driver must apply a torque to the steering wheel to return the steering wheel, which leads to a problem of a decrease in steering feel.

The present disclosure has been made in view of the above circumstances, and an objective thereof is to provide a steering control device, an electric power steering device, and a vehicle capable of preventing unnecessary current consumption when the vehicle is in a stopped state and a decrease in steering feel when the vehicle travels, which are caused by differences in required target steering torque characteristics depending on a vehicle speed.

Means to Solve the Problem

In order to solve the above-described problems, a steering control device according to one aspect of the present disclosure includes a target steering torque setter configured to set a target steering torque with respect to a steering system, and a steering torque controller configured to control a steering assist torque required to cause a steering torque to follow the target steering torque based on a deviation between the target steering torque and the steering torque acting on the steering system, in which the target steering torque setter sets the target steering torque based on the steering torque and the steering assist torque when a vehicle is in a stopped state, the target steering torque based on the steering torque, the steering assist torque, a steering angle of the steering system, and a vehicle speed in a first vehicle speed range, and the target steering torque based on the steering angle and the vehicle speed in a second vehicle speed range.

Also, an electric power steering device according to one aspect of the present disclosure includes a steering torque detector configured to detect a steering torque acting on a steering system, a steering state detector configured to detect a steering angle of the steering system, a motor configured to apply a steering assist torque to the steering system, and the above-described steering control device configured to control driving of the motor based on the detected steering torque and steering angle.

Also, a vehicle according to one aspect of the present disclosure includes a vehicle speed detector configured to detect a speed of a vehicle, and the above-described electric power steering device controlling the steering assist torque applied to the steering system based on the vehicle speed detected by the vehicle speed detector.

Effects of the Invention

According to the present disclosure, it is possible to prevent unnecessary current consumption when a vehicle is in a stopped state and a decrease in steering feel when the vehicle travels, which are caused by differences in required target steering torque characteristics depending on a vehicle speed.

Brief Description of Drawings

[FIG. 1] A block diagram showing a configuration of a relevant part of an electric power steering device and a vehicle according to embodiment 1 of the present disclosure.
[FIG. 2] A block diagram showing a configuration of a relevant part of a controller as a steering control device according to embodiment 1 of the present disclosure.
[FIG. 3] A block diagram showing an internal configuration of a target steering torque setter in embodiment 1 of the present disclosure.
[FIG. 4A] A block diagram showing a configuration example of a first torque calculator in embodiment 1 of the present disclosure.
[FIG. 4B] A block diagram showing another configuration example of the first torque calculator in embodiment 1 of the present disclosure.
[FIG. 5] A diagram showing an example of a characteristic of a first torque obtained by the first torque calculator in embodiment 1 of the present disclosure.
[FIG. 6A] A block diagram showing a configuration example of a second torque calculator in embodiment 1 of the present disclosure.

[FIG. 6B] A block diagram showing another configuration example of the second torque calculator in embodiment 1 of the present disclosure.
[FIG. 7] A diagram showing an example of the characteristics of the second torque obtained by the second torque calculator in embodiment 1 of the present disclosure.
[FIG. 8] A diagram for explaining an example of an operation of a modulator when a vehicle speed is changed while a steering angle is in a position other than a neutral position in embodiment 1 of the present disclosure.
[FIG. 9] A block diagram showing an example of an internal configuration of a torque feedback calculator in embodiment 1 of the present disclosure.
[FIG. 10] A block diagram showing an internal configuration of a target steering torque setter in embodiment 2 of the present disclosure.
[FIG. 11] A diagram showing an example of a vehicle speed-sensitive gain map in embodiment 2 of the present disclosure.
[FIG. 12] A block diagram showing an internal configuration of a target steering torque setter in embodiment 3 of the present disclosure.
[FIG. 13A] A block diagram showing a configuration example of a first map torque calculator in embodiment 3 of the present disclosure.
[FIG. 13B] A block diagram showing another configuration example of the first map torque calculator in embodiment 3 of the present disclosure.
[FIG. 14A] A block diagram showing a configuration example of a second map torque calculator in embodiment 3 of the present disclosure.
[FIG. 14B] A block diagram showing another configuration example of the second map torque calculator in embodiment 3 of the present disclosure.
[FIG. 15] A diagram showing an example of a first torque map and a second torque map in embodiment 3 of the present disclosure.

Description of Embodiments

Hereinafter, a steering control device, an electric power steering device, and a vehicle according to embodiments of the present disclosure will be described in detail with reference to the drawings. Furthermore, in each embodiment, the same or corresponding parts are denoted by the same reference signs, and description of overlapping parts will be omitted.

[Embodiment 1]

<Electric power steering device and vehicle>

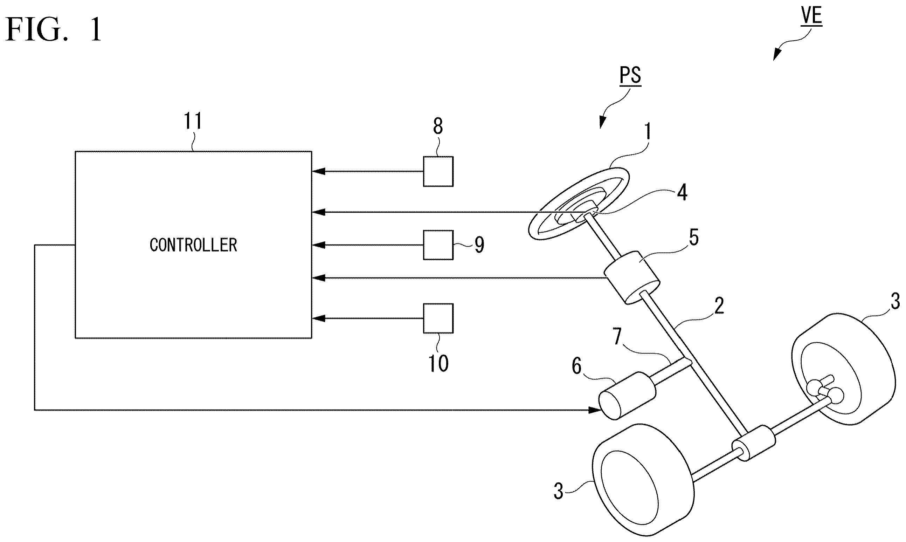

FIG. 1 is a block diagram showing a configuration of a relevant part of an electric power steering device and a vehicle according to embodiment 1 of the present disclosure. As shown in FIG. 1, a vehicle VE according to the present embodiment includes a vehicle speed sensor 8 (vehicle speed detector) and an electric power steering device PS. The electric power steering device PS includes a steering wheel 1, a steering shaft 2, steered wheels 3, a steering angle sensor 4 (steering state detector), a torque sensor 5 (steering torque detector), a motor 6, a speed reduction mechanism 7, a current sensor 9, a motor rotation angle sensor 10, and a controller 11 (steering control device).

The steering wheel 1 is a so-called handle, and is operated by a driver of the vehicle VE to apply a steering angle to the steered wheels 3 of the vehicle VE. The steering shaft 2 is connected to the steering wheel 1 and rotates in accordance with rotation of the steering wheel 1. The steered wheels 3 are provided on both the left and right sides of the vehicle VE, and are steered in accordance with rotation of the steering shaft 2. Furthermore, a mechanism for steering the steered wheels 3, including the steering wheel 1 and the steering shaft 2, will be referred to as a "steering (steering system)".

The steering angle sensor 4 is disposed on the steering wheel 1 and detects a steering angle of the steering wheel 1. The torque sensor 5 is disposed on the steering shaft 2 and detects a steering torque acting on the steering shaft 2. The motor 6 is connected to the steering shaft 2 via the speed reduction mechanism 7 and applies a steering assist torque to the steering shaft 2. The vehicle speed sensor 8 detects a speed of the vehicle VE. The current sensor 9 detects a current flowing through the motor 6. The motor rotation angle sensor 10 detects a rotation angle of the motor 6.

The controller 11 controls driving of the motor 6 based on detection results of the steering angle sensor 4, the torque sensor 5, the vehicle speed sensor 8, the current sensor 9, and the motor rotation angle sensor 10 to generate a steering assist torque with respect to the steering. Specifically, the controller 11 calculates the steering assist torque to be applied to the steering shaft 2 based on the above-described detection results to control a current of the motor 6 required to generate the steering assist torque. Hereinafter, the controller 11 will be described in detail.

<Steering control device>

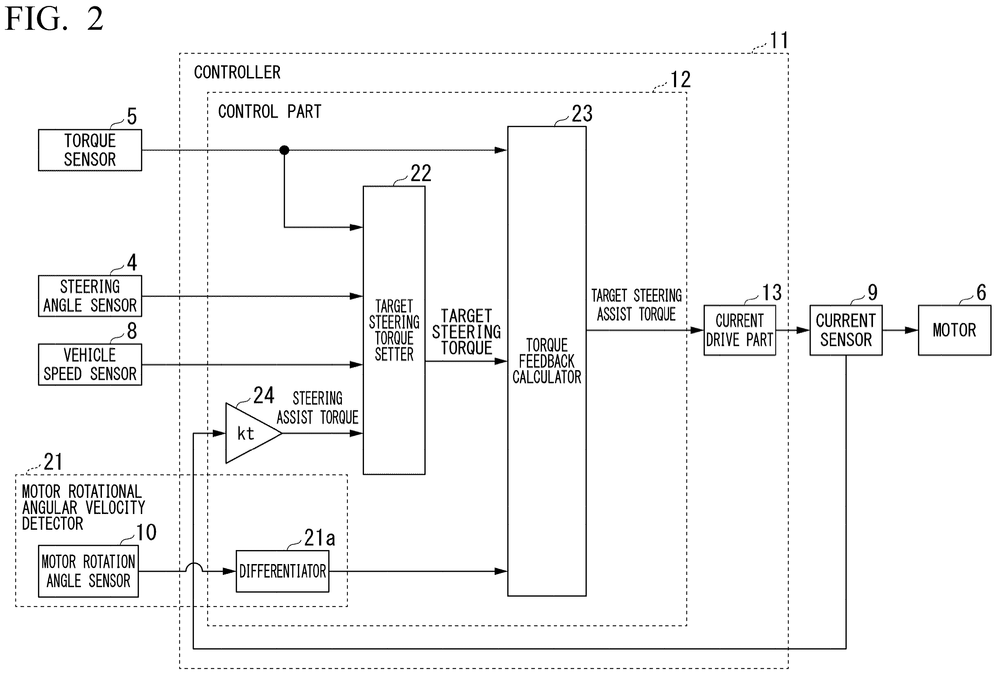

FIG. 2 is a block diagram showing a configuration of a relevant part of the controller serving as the steering control device according to embodiment 1 of the present disclosure. As shown in FIG. 2, the controller 11 includes a control part 12 and a current drive part 13. The control part 12 includes a differentiator 21a, a target steering torque setter 22, a torque feedback calculator 23 (steering torque controller), and a multiplier 24.

The differentiator 21a differentiates the rotation angle of the motor 6 detected by the motor rotation angle sensor 10 to calculate a rotational angular velocity of the motor 6 (hereinafter referred to as a "motor rotational angular velocity"). Furthermore, the differentiator 21a, together with the motor rotation angle sensor 10, constitutes a motor rotational angular velocity detector 21 that detects a motor rotational angular velocity.

The target steering torque setter 22 sets a target steering torque with respect to the steering. Here, the target steering torque setter 22 receives, as inputs, a steering angle of the steering wheel 1 detected by the steering angle sensor 4, a steering torque detected by the torque sensor 5, a vehicle speed of the vehicle VE detected by the vehicle speed sensor 8, and a steering assist torque output from the multiplier 24 (details of which will be described later). The target steering torque setter 22 sets a target steering torque with respect to the steering by using these detection results and the like. Furthermore, the target steering torque setter 22 will be described in detail later.

The torque feedback calculator 23 receives, as inputs, a steering torque detected by the torque sensor 5, a motor rotational angular velocity detected by the motor rotational angular velocity detector 21, and a target steering torque set by the target steering torque setter 22. The torque feedback calculator 23 calculates a target steering assist torque required for making the steering torque follow the target steering torque based on a deviation between the target steering torque and the steering torque, and the motor rotational angular velocity. Furthermore, the torque feedback calculator 23 will be described in detail later.

The multiplier 24 obtains the steering assist torque by multiplying a current flowing through the motor 6 detected by the current sensor 9 by a predetermined torque constant Kt. Specifically, assuming that the current flowing through the motor 6 is I, the multiplier 24 performs the calculation shown in the following (1) to obtain a steering assist torque Tmotor. Furthermore, the torque constant Kt is set to a value that takes into consideration of a speed reduction ratio of the speed reduction mechanism 7.

$$\mathrm{Tmotor} = \mathrm{I} \times \mathrm{Kt} \cdots (1)$$

Furthermore, the control part 12 of the controller 11 is implemented by a microcomputer having a central processing unit (CPU) and a memory. The memory provided in the microcomputer may include both a volatile memory and a non-volatile memory. The current drive part 13 is implemented by an analog circuit including a plurality of switching elements such as, for example, a field effect transistor (FET).

Here, an overview of an operation of the controller 11, which constitutes a relevant part of the electric power steering device PS, will be described. Furthermore, the operation described below is repeatedly performed over a predetermined control cycle.

First, the control part 12 of the controller 11 acquires the steering angle detected by the steering angle sensor 4, the vehicle speed detected by the vehicle speed sensor 8, the steering torque detected by the torque sensor 5, and the motor rotation angle detected by the motor rotation angle sensor 10. Then, the differentiator 21a of the control part 12 obtains the motor rotational angular velocity by differentiating the motor rotation angle detected by the motor rotation angle sensor 10. Also, as in expression (1) described above, the multiplier 24 of the control part 12 obtains the steering assist torque by multiplying a current I flowing through the motor 6, detected by the current sensor 9, by the torque constant Kt.

Next, the target steering torque setter 22 of the control part 12 sets the target steering torque using the steering angle detected by the steering angle sensor 4, the vehicle speed detected by the vehicle speed sensor 8, the steering torque detected by the torque sensor 5, and the steering assist torque obtained by the multiplier 24. Next, the torque feedback calculator 23 of the control part 12 calculates the target steering assist torque required to make the steering torque follow the target steering torque based on the deviation between the target steering torque set by the target steering torque setter 22 and the steering torque detected by the torque sensor 5, and the motor rotational angular velocity obtained by the differentiator 21a. Next, the current drive part 13 of the controller **11** controls a current flowing through the motor 6 to cause the target steering assist torque calculated by the torque feedback calculator 23 to be generated in the steering.

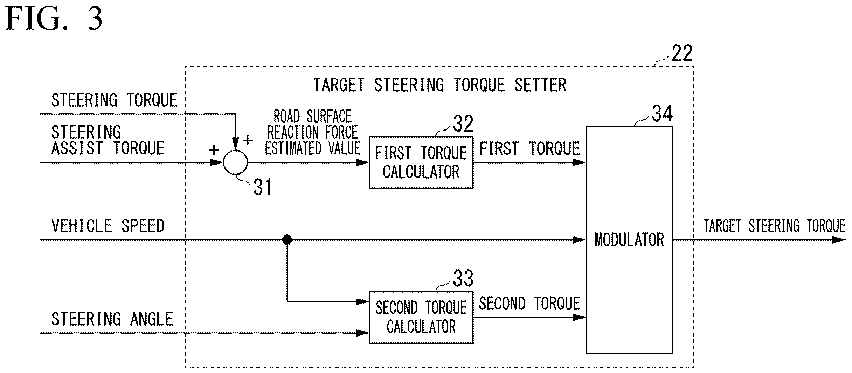

FIG. 3 is a block diagram showing an internal configuration of the target steering torque setter in embodiment 1 of the present disclosure. As shown in FIG. 3, the target steering torque setter 22 includes an adder 31, a first torque calculator 32, a second torque calculator 33, and a modulator 34.

The adder 31 obtains a road surface reaction force estimated value by adding the steering torque detected by the torque sensor 5 and the steering assist torque obtained by the multiplier 24. Here, the road surface reaction force estimated value obtained by the adder 31 is a torque acting on the steering shaft 2 due to turning of the wheel by the steering, and can be treated as equivalent to a road surface reaction torque generated in the steered wheels 3.

This road surface reaction force estimated value can be obtained by calculation without directly sensing the road surface reaction torque actually generated in the steered wheels 3. Specifically, if the steering torque detected by the torque sensor 5 is assumed to be Tsens, a road surface reaction force estimated value Test can be calculated using the following generally known expression (2).

$$Test = Tsens + Tmotor \; ... \; (2)$$

Based on the above-described expression (2), in the configuration shown in FIG. 3, the road surface reaction force estimated value is obtained by adding a steering torque Tsens detected by the torque sensor 5 and the steering assist torque Tmotor obtained by the multiplier 24 by the adder 31.

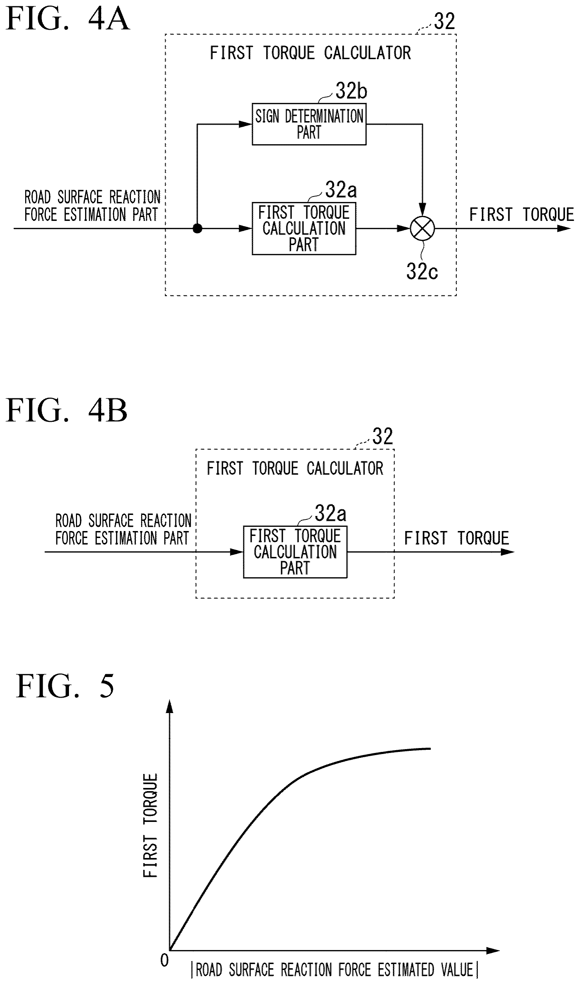

The first torque calculator 32 calculates a first torque based on the road surface reaction force estimated value calculated by the adder 31. FIG. 4A is a block diagram showing a configuration example of the first torque calculator according to embodiment 1 of the present disclosure. The first torque calculator 32 shown in FIG. 4A includes a first torque calculation part 32a, a sign determination part 32b, and a multiplier 32c.

The first torque calculation part 32a calculates the first torque having a magnitude corresponding to an absolute value of the input road surface reaction force estimated value. The sign determination part 32b determines a sign of the input road surface reaction force estimated value, and outputs "+1" if the sign is positive and outputs "-1" if the sign is negative. The multiplier 32c multiplies the first torque calculated by the first torque calculation part 32a by a value output from the sign determination part 32b.

FIG. 5 is a diagram showing an example of a characteristic of the first torque obtained by the first torque calculator in embodiment 1 of the present disclosure. As shown in FIG. 5, the first torque obtained by the first torque calculator 32 has a gradual-increasing characteristic (including the flat shape) with an increase in the absolute value of the road surface reaction force estimated value. Also, the first torque takes only positive values.

FIG. 4B is a block diagram showing another configuration example of the first torque calculator according to embodiment 1 of the present disclosure. The first torque calculator 32 shown in FIG. 4B is configured with only the first torque calculation part 32a while the sign determination part 32b and the multiplier 32c are omitted from the first torque calculator 32 shown in FIG. 4A. In the first torque calculator 32 shown in FIG. 4B, the first torque that becomes positive or negative according to the sign of the road surface reaction force estimated value is obtained.

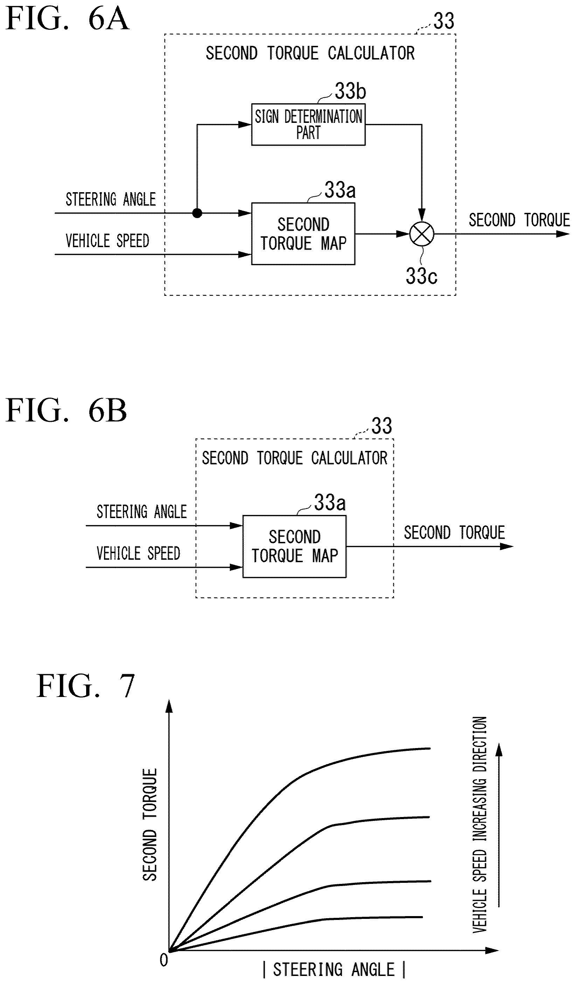

The second torque calculator 33 obtains a second torque based on the vehicle speed detected by the vehicle speed sensor 8 and the steering angle detected by the steering angle sensor 4. FIG. 6A is a block diagram showing a configuration example of the second torque calculator according to embodiment 1 of the present disclosure. The second torque calculator 33 shown in FIG. 6A includes a second torque map 33a, a sign determination part 33b, and a multiplier 32c.

The second torque map 33a is a map in which a relationship between the vehicle speed, the steering angle, and the second torque is defined. When the vehicle speed and steering angle are input, the second torque map 33a outputs the second torque according to the vehicle speed and steering angle. The sign determination part 33b determines a sign of the input steering angle, and outputs "+1" if the sign is positive, and outputs "-1" if the sign is negative. The multiplier 33c multiplies the second torque output from the second torque map 33a by a value output from the sign determination part 33b.

FIG. 7 is a diagram showing an example of a characteristic of the second torque obtained by the second torque calculator in embodiment 1 of the present disclosure. As shown in FIG. 7, the second torque obtained by the second torque calculator 33 has a non-decreasing characteristic (including the flat shape) with an increase in the vehicle speed when an absolute value of the steering angle is the same, and has a non-decreasing characteristic (including the flat shape) with an increase in the absolute value of the steering angle when the vehicle speed is the same. Also, the second torque takes only positive values.

FIG. 6B is a block diagram showing another configuration example of the second torque calculator according to embodiment 1 of the present disclosure. The second torque calculator 33 shown in FIG. 6B is configured with only the second torque map 33a while the sign determination part 33b and the multiplier 33c are omitted from the second torque calculator 33 shown in FIG. 6A. In the second torque calculator 33 shown in FIG. 6B, the second torque that becomes positive or negative according to the sign of the steering angle is obtained.

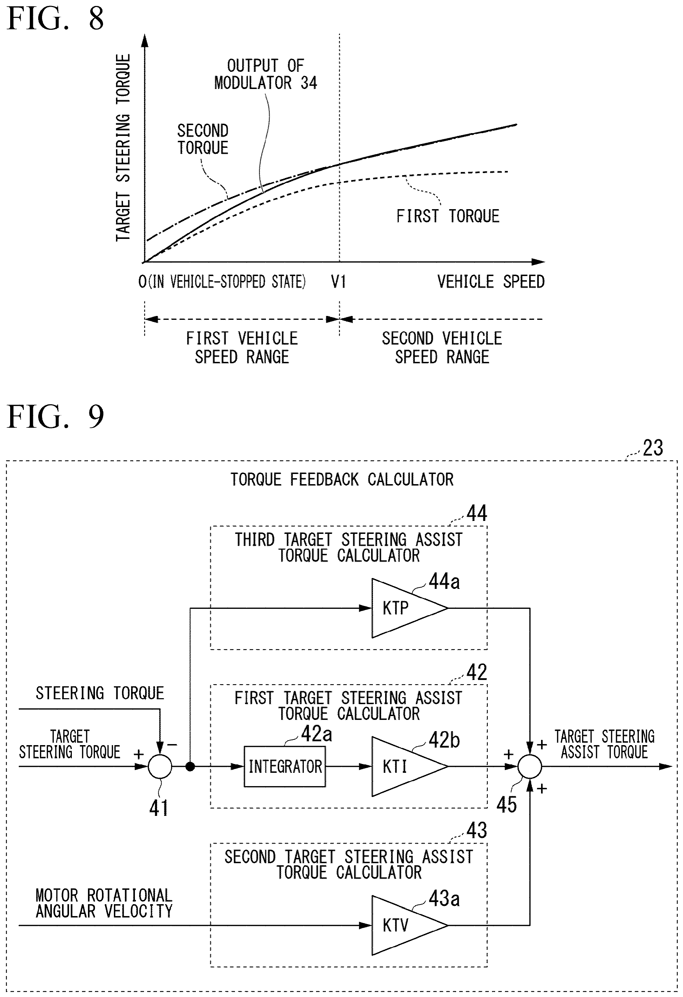

The modulator 34 outputs the target steering torque based on the vehicle speed detected by the vehicle speed sensor 8, the first torque obtained by the first torque calculator 32, and the second torque obtained by the second torque calculator 33. The target steering torque output by the modulator 34 is appropriate for each vehicle speed range. FIG. 8 is a diagram for explaining an example of an operation of the modulator when the vehicle speed is changed while the steering angle is in a position other than a neutral position in embodiment 1 of the present disclosure.

As shown in FIG. 8, a vehicle speed range is divided into a stopped state (vehicle speed 0) and a boundary vehicle speed V1. A vehicle speed range in which the vehicle speed satisfies "0 < vehicle speed < V1" is defined as a "first vehicle speed range", and a vehicle speed range in which the vehicle speed satisfies "V1 ≤ vehicle speed" is defined as a "second vehicle speed range". As shown in FIG. 8, the modulator 34 outputs the target steering torque that matches the first torque when the vehicle is in a stopped state and matches the second torque at the boundary vehicle speed V1, and, in an intermediate range (first vehicle speed range) between them, outputs the target steering torque that is an intermediate value between the first torque and the second torque such that no discontinuity occurs according to the vehicle speed. It can also be said that the modulator 34 calculates the first torque as the target steering torque when the vehicle is in a stopped state, and calculates the target steering torque based on the first torque, the second torque, and the vehicle speed when the vehicle is not in a stopped state.

Here, the first torque is a torque obtained from the road surface reaction force estimated value, which is a sum of the steering torque and the steering assist torque, and the second torque is a torque obtained from the steering angle and the vehicle speed. Therefore, it can be said that the target steering torque setter 22 sets the target steering torque based on the steering torque and the steering assist torque when the vehicle is in a stopped state. Also, in the first vehicle speed range, it can be said that the target steering torque is set based on the steering torque, the steering assist torque, the steering angle of the steering system, and the vehicle speed. Also, in the second vehicle speed range, it can be said that the target steering torque is set based on the steering angle and the vehicle speed.

FIG. 9 is a block diagram showing an example of an internal configuration of the torque feedback calculator according to embodiment 1 of the present disclosure. As shown in FIG. 9, the torque feedback calculator 23 includes a subtractor 41, a first target steering assist torque calculator 42, a second target steering assist torque calculator 43, a third target steering assist torque calculator 44, and an adder 45.

The subtractor 41 calculates a deviation between the target steering torque and the steering torque. The first target steering assist torque calculator 42 includes an integrator 42a and an amplifier 42b, and obtains a first target steering assist torque by integrating the deviation calculated by the subtractor 41, and then multiplying the result by an integral control gain KTI. The second target steering assist torque calculator 43 includes an amplifier 43a, and obtains a second target steering assist torque by multiplying the motor rotational angular velocity by a speed control gain KTV.

The third target steering assist torque calculator 44 includes an amplifier 44a, and calculates a third target steering assist torque by multiplying the deviation calculated by the subtractor 41 by a proportional control gain KTP. The adder 45 adds the first target steering assist torque, the second target steering assist torque, and the third target steering assist torque to obtain the target steering assist torque. Furthermore, the torque feedback calculator 23 is not limited to the configuration shown in FIG. 9, and may have any configuration as long as it has a function of making the steering torque follow the target steering torque.

In the present embodiment, an appropriate target steering torque is set for each vehicle speed range by the target steering torque setter 22, and the target steering assist torque is controlled by the torque feedback calculator 23 so that the driver's steering torque follows the target steering torque. Therefore, the driver can steer with an appropriate torque.

Here, in the present embodiment, since the first torque is calculated based on the road surface reaction force estimated value, even if the driver releases the steering wheel 1 when the steering angle is at a position other than 0 [deg], the target steering torque becomes "0" at a position in which the road surface reaction force estimated value becomes "0". Furthermore, the position in which the road surface reaction force estimated value becomes "0" is a position at which it balances with a mechanism friction torque, and is not limited to the neutral position of the steering wheel 1. In a state in which the driver releases the steering wheel 1, since the steering torque becomes "0", the deviation between the target steering torque and the steering torque is eliminated, unnecessary current consumption when the vehicle is in a stopped state can be suppressed.

Also, in the present embodiment, the modulator 34 is provided to continuously transition the target steering torque from the first torque to the second torque. In the second vehicle speed range, since the second torque is calculated based on the steering angle and the vehicle speed, the target steering torque is set in a direction that returns the steering wheel 1 to the neutral position when it is in a position other than the neutral position. Therefore, when the driver releases the steering wheel 1 (that is, the steering torque is "0") in the second vehicle speed range, the steering wheel 1 is returned to the neutral position, making it possible to prevent a decrease in steering feel.

Furthermore, in the above-described embodiment, the target steering torque in a vehicle-stopped state is described as being solely the first torque (100% first torque), but the present disclosure also includes cases in which the target steering torque is substantially the first torque such as when a ratio of the first torque to the second torque is 99:1. Also, information indicating the motor rotational angular velocity or the like may be input to the target steering torque setter 22 to calculate the target steering torque. When information indicating the motor rotational angular velocity or the like is input, the target steering torque can be flexibly set based on such additional information, thereby enabling an improvement in convergence, imparting a sense of friction, and the like.

Also, in the present embodiment, the steering angle sensor 4 is used as a steering state detector, and the steering angle detected by the steering angle sensor 4 is used by the target steering torque setter 22. However, instead of the detection result of the steering angle sensor 4, an angle obtained by converting the motor rotation angle detected by the motor rotation angle sensor 10 into the steering angle may be used. For example, an angle obtained by converting the motor rotation angle detected by the motor rotation angle sensor 10 into an angle of the steering shaft 2 using the speed reduction ratio of the speed reduction mechanism 7 may be used. Furthermore, when the motor rotation angle is a relative angle with respect to the angle of the steering shaft 2, a yaw rate sensor or the like (not shown) provided in the vehicle VE may be used to determine that the vehicle is traveling straight, and the relative angle may be offset to zero so that it can be used as an absolute angle of the steering shaft 2.

[Embodiment 2]

<Electric power steering device and vehicle>

Configurations of the electric power steering device and the vehicle according to the present embodiment are basically similar to the configurations of the electric power steering device PS and the vehicle VE shown in FIG. 1. Therefore, detailed description of the electric power steering device and the vehicle according to the present embodiment will be omitted.

<Steering control device>

A basic configuration of a steering control device according to the present embodiment is similar to that of the steering control device (controller 11) according to embodiment 1. However, an internal configuration of a target steering torque setter 22 provided in a controller 11 is different. Hereinafter, the target steering torque setter 22 will be described in detail.

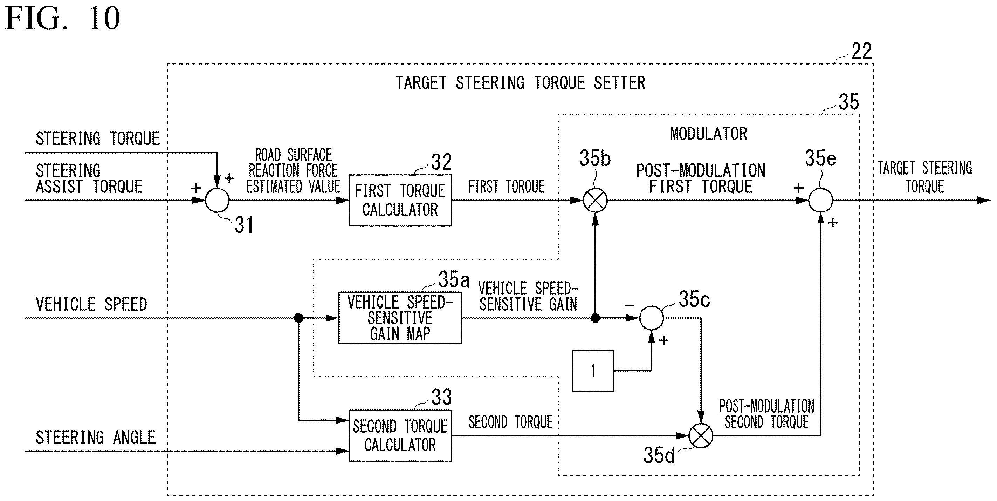

FIG. 10 is a block diagram showing an internal configuration of the target steering torque setter according to embodiment 2 of the present disclosure. As shown in FIG. 10, the target steering torque setter 22 of the present embodiment includes an adder 31, a first torque calculator 32, a second torque calculator 33, and a modulator 35. That is, the target steering torque setter 22 of the present embodiment is configured such that the modulator 34 of the target steering torque setter 22 shown in FIG. 3 is replaced with the modulator 35.

The modulator 35 includes a vehicle speed-sensitive gain map 35a, a multiplier 35b, a subtractor 35c, a multiplier 35d, and an adder 35e. The vehicle speed-sensitive gain map 35a is a map in which a vehicle speed-sensitive gain corresponding to the vehicle speed is defined. When a vehicle speed is input to the vehicle speed-sensitive gain map 35a, a vehicle speed-sensitive gain corresponding to the vehicle speed is output from the vehicle speed-sensitive gain map 35a.

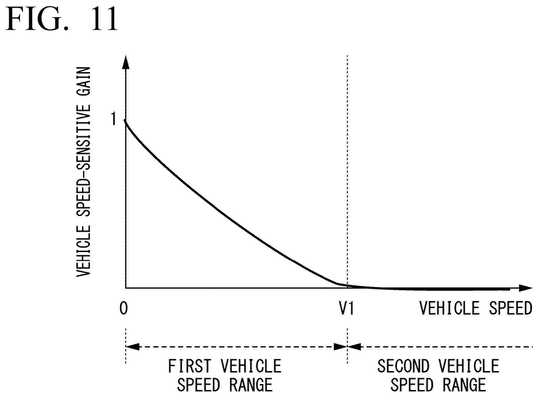

FIG. 11 is a diagram showing an example of the vehicle speed-sensitive gain map in embodiment 2 of the present disclosure. As shown in FIG. 11, the vehicle speed-sensitive gain map 35a is a map having a characteristic in which the vehicle speed-sensitive gain changes continuously according to the vehicle speed. The vehicle speed-sensitive gain defined by the vehicle speed-sensitive gain map 35a takes a value between "0" and "1". The vehicle speed-sensitive gain map 35a shown in FIG. **11** has a value of "1" when the vehicle is in a stopped state, gradually decreases as the vehicle speed increases in a first vehicle speed range, and has a value of "0" in a second vehicle speed range.

The multiplier 35b obtains a post-modulation first torque by multiplying the first torque obtained by the first torque calculator 32 by the vehicle speed-sensitive gain output from the vehicle speed-sensitive gain map 35a. The subtractor 35c subtracts the vehicle speed-sensitive gain output from the vehicle speed-sensitive gain map 35a from the value "1". The multiplier 35d obtains a post-modulation second torque by multiplying the second torque obtained by the second torque calculator 33 by a value output from the subtractor 35c. The adder 35e obtains the target steering torque by adding the post-modulation first torque obtained by the multiplier 35b and the post-modulation second torque obtained by the multiplier 35d.

Here, as described above, the post-modulation first torque is obtained by multiplying the first torque by the vehicle speed-sensitive gain. In contrast, the post-modulation second torque is obtained by multiplying the second torque by a value obtained by subtracting the vehicle speed-sensitive gain from the value "1". As shown in FIG. 11, since the value of the vehicle speed-sensitive gain is "1" when the vehicle is in a stopped state, the post-modulation second torque becomes "0". Also, in the second vehicle speed range, since the value of the vehicle speed-sensitive gain is "0", the post-modulation first torque becomes "0". Therefore, it can be said that the vehicle speed-sensitive gain map 35a has a configuration in which the vehicle speed-sensitive gain is defined such that the post-modulation second torque becomes "0" when the vehicle is in a stopped state, and the vehicle speed-sensitive gain is defined such that the post-modulation first torque becomes "0" in the second vehicle speed range.

Since the value of the vehicle speed-sensitive gain is "1" in a vehicle-stopped state, the first torque is set as the target steering torque when the vehicle is in a stopped state. Since the value of the vehicle speed-sensitive gain in the first vehicle speed range is a value between "0" and "1", an intermediate value between the first torque and the second torque is set as the target steering torque in the first vehicle speed range. Since the value of the vehicle speed-sensitive gain in the second vehicle speed range is "0", the second torque is set as the target steering torque in the second vehicle speed range. That is, in the present embodiment, the target steering torque set by the target steering torque setter 22 is similar to that shown in FIG. 8.

As described above, in the present embodiment as well, the first torque is calculated based on the road surface reaction force estimated value, and the modulator 35 is provided to continuously transition the target steering torque from the first torque to the second torque. Therefore, similarly to embodiment 1, unnecessary current consumption when the vehicle is in a stopped state can be suppressed, and a decrease in steering feel can be prevented.

Furthermore, the modulator 35 shown in FIG. 10 is configured to obtain the post-modulation second torque by multiplying a value obtained by subtracting the vehicle speed-sensitive gain output from the vehicle speed-sensitive gain map 35a from the value "1" by the second torque obtained by the second torque calculator 33. However, separately from the vehicle speed-sensitive gain map 35a, it may be configured such that a vehicle speed-sensitive gain map in which the vehicle speed-sensitive gain at each vehicle speed of the vehicle speed-sensitive gain map 35a is subtracted from the value "1" may be provided, and the vehicle speed-sensitive gain output from the vehicle speed-sensitive gain map may be multiplied by the second torque obtained by the second torque calculator 33 to obtain the post-modulation second torque.

[Embodiment 3]

<Electric power steering device and vehicle>

Configurations of the electric power steering device and the vehicle according to the present embodiment are basically similar to the configurations of the electric power steering device PS and the vehicle VE shown in FIG. 1. Therefore, detailed description of the electric power steering device and the vehicle according to the present embodiment will be omitted.

<Steering control device>

A basic configuration of a steering control device according to the present embodiment is similar to that of the steering control device (controller 11) according to embodiment 1. However, an internal configuration of a target steering torque setter 22 provided in the controller 11 is different. Hereinafter, the target steering torque setter 22 will be described in detail.

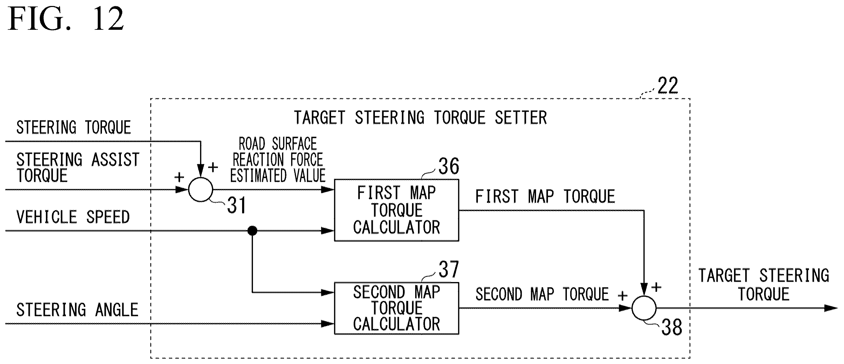

FIG. 12 is a block diagram showing an internal configuration of the target steering torque setter according to embodiment 3 of the present disclosure. As shown in FIG. 12, the target steering torque setter 22 of the present embodiment includes an adder 31, a first map torque calculator 36, a second map torque calculator 37, and an adder 38. That is, the target steering torque setter 22 of the present embodiment is configured by replacing the first torque calculator 32, the second torque calculator 33, and the modulator 34 of the target steering torque setter 22 shown in FIG. 3 with the first map torque calculator 36, the second map torque calculator 37, and the adder 38.

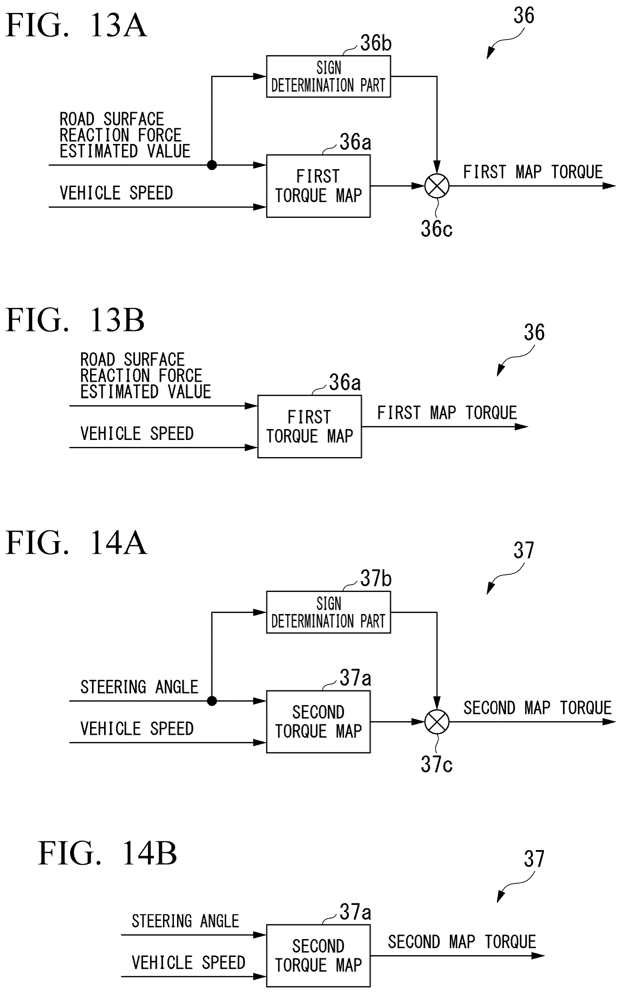

The first map torque calculator 36 obtains a first map torque based on a road surface reaction force estimated value calculated by the adder 31 and a vehicle speed detected by a vehicle speed sensor 8. FIG. 13A is a block diagram showing a configuration example of the first map torque calculator according to embodiment 3 of the present disclosure. The first map torque calculator 36 shown in FIG. 13A includes a first torque map 36a, a sign determination part 36b, and a multiplier 36c.

The first torque map 36a is a map in which a relationship between the vehicle speed, the road surface reaction force estimated value, and the first map torque is defined. When the vehicle speed and the road surface reaction force estimated value are input to the first torque map 36a, the first map torque corresponding to the vehicle speed and the road surface reaction force estimated value is output from the first torque map 36a. The sign determination part 36b determines a sign of the input road surface reaction force estimated value, and outputs "+1" if the sign is positive and outputs "-1" if the sign is negative. The multiplier 36c multiplies the first map torque output from the first torque map 36a by the value output from the sign determination part 36b.

The second map torque calculator 37 obtains a second map torque based on the vehicle speed detected by the vehicle speed sensor 8 and the steering angle detected by the steering angle sensor 4. FIG. 14A is a block diagram showing a configuration example of the second map torque calculator according to embodiment 3 of the present disclosure. The second map torque calculator 37 shown in FIG. 14A includes a second torque map 37a, a sign determination part 37b, and a multiplier 37c.

The second torque map 37a is a map in which a relationship between the vehicle speed, the steering angle, and the second map torque is defined. When the vehicle speed and the steering angle are input, the second torque map 37a outputs the second map torque according to the vehicle speed and the steering angle. The sign determination part 37b determines a sign of the input steering angle, and outputs "+1" if the sign is positive and outputs "-1" if the sign is negative. The multiplier 37c multiplies the second map torque output from the second torque map 37a by the value output from the sign determination part 37b.

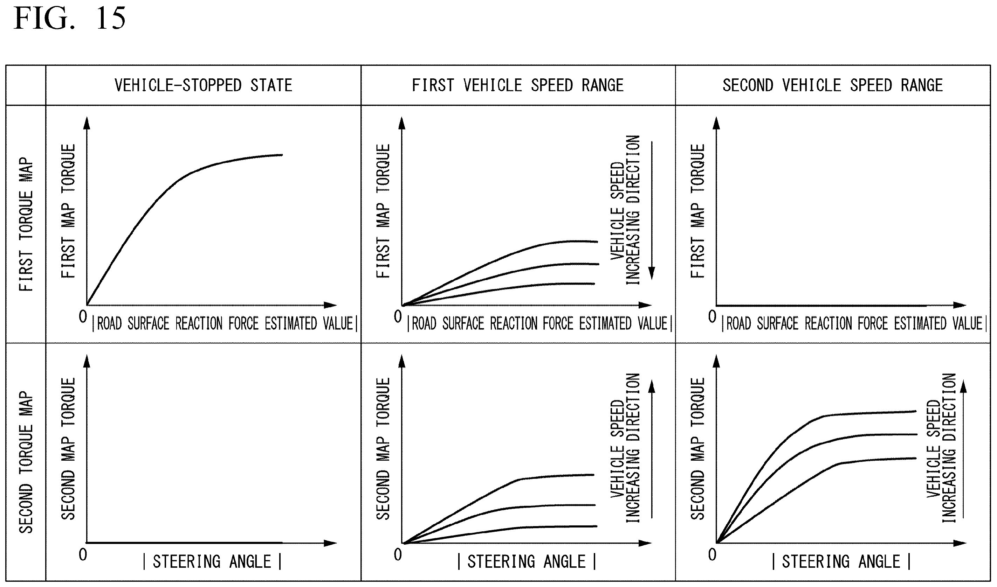

FIG. 15 is a diagram showing an example of the first torque map and the second torque map according to embodiment 3 of the present disclosure. As shown in FIG. 15, the first torque map 36a and the second torque map 37a are each provided separately for a vehicle-stopped state, a first vehicle speed range, and a second vehicle speed range.

The first torque map 36a in a vehicle-stopped state has a characteristic in which the first map torque gradually increases (including the flat shape) as an absolute value of the road surface reaction force estimated value increases. The first torque map 36a in the first vehicle speed range has a characteristic in which the first map torque does not increase (including the flat shape) as the vehicle speed increases when the absolute value of the road surface reaction force estimated value is the same, and a characteristic in which the first map torque does not decrease (including the flat shape) as the absolute value of the road surface reaction force estimated value increases when the vehicle speed is the same. The first torque map 36a in the second vehicle speed range is defined such that the first map torque is zero. Furthermore, the first map torque takes only positive values.

The second torque map 37a in a vehicle-stopped state is defined so that the second map torque is zero. The second torque map 37a in the first vehicle speed range and the second vehicle speed range has a characteristic in which the second map torque does not decrease (including the flat shape) as the vehicle speed increases when an absolute value of the steering angle is the same, and a characteristic in which the second map torque does not decrease (including the flat shape) as an absolute value of the steering angle increases when the vehicle speed is the same. Furthermore, the second map torque takes only positive values.

FIG. 13B is a block diagram showing another configuration example of the first map torque calculator in embodiment 3 of the present disclosure. The first map torque calculator 36 shown in FIG. 13B has a configuration in which the sign determination part 36b and the multiplier 36c are omitted in the first map torque calculator 36 shown in FIG. 13A, and only the first torque map 36a is provided. In the first map torque calculator 36 shown in FIG. 14B, the first map torque that becomes positive or negative according to the sign of the road surface reaction force estimated value is obtained.

FIG. 14B is a block diagram showing another configuration example of the second map torque calculator in embodiment 3 of the present disclosure. The second map torque calculator 37 shown in FIG. 6B is configured such that the sign determination part 37b and the multiplier 37c are omitted in the second map torque calculator 37 shown in FIG. 14A, and only the second torque map 37a is provided. In the second map torque calculator 37 shown in FIG. 14B, the second map torque that becomes positive or negative according to the sign of the steering angle is obtained.

The adder 38 obtains the target steering torque by adding the first map torque obtained by the first map torque calculator 36 and the second map torque obtained by the second map torque calculator 37.

Here, as shown in FIG. 15, since the second torque map 37a in a vehicle-stopped state is defined so that the second map torque is zero, the first map torque is set as the target steering torque when the vehicle is in a stopped state. Since the first torque map 36a and the second torque map 37a in the first vehicle speed range have the characteristics shown in FIG. 15, in the first vehicle speed range, the target steering torque is set as a value obtained by adding the first map torque and the second map torque such that no discontinuity occurs according to the vehicle speed. Since the first torque map 36a in the second speed range is defined such that the first map torque is zero, the second map torque is set as the target steering torque in the second vehicle speed range. In this manner, also in the present embodiment, the target steering torque set by the target steering torque setter 22 is similar to that shown in FIG. 8.

As described above, in the present embodiment, the first map torque is calculated based on the road surface reaction force estimated value, and the target steering torque is continuously transitioned from the first map torque to the second map torque. Therefore, similarly to embodiment 1, unnecessary current consumption when the vehicle is in a stopped state can be suppressed, and a decrease in steering feel can be prevented.

Also, in the present embodiment, functions of the modulator 34 in embodiment 1 and the modulator 35 in embodiment 2 can be said to be inherent in the first torque map 36a and the second torque map 37a in advance. Therefore, in the present embodiment, the target steering torque can be set simply by calculating and adding the first map torque and the second map torque, a processing load on the control part 12 can be reduced.

Although the embodiments of the present disclosure have been described above, the present disclosure is not limited to the above-described embodiments, and can be freely modified within a range not departing from the spirit of the present disclosure. For example, the electric power steering device PS described in the above embodiment may be of a column type or a rack-and-pinion type. Also, in the case in which feedback control is performed based on the target steering torque, the present disclosure can also be applied to a steer-by-wire reaction force device or the like that includes at least a torque sensor. Also, the drawings used in the description of the above embodiments are merely examples, and the present disclosure is not limited thereto.

Furthermore, the control part 12 included in the controller **11** described above has a computer system therein. Then, a program for realizing functions of the control part 12 of the controller 11 described above may be recorded on a computer-readable recording medium, and processing in each configuration of the controller **11** described above may be performed by causing the computer system to read and execute the program recorded on the recording medium. Here, "causing the computer system to read and execute the program recorded on the recording medium" includes installing the program on the computer system. The "computer system" described herein includes an OS and hardware such as peripheral devices.

Also, the "computer system" may include a plurality of computer devices connected via a network including the Internet or a communication line such as a WAN, LAN, or dedicated line. Also, the "computer-readable recording medium" refers to a portable medium such as a flexible disk, a magneto-optical disk, a ROM, and a CD-ROM, and a storage device such as a hard disk built in a computer system. In this way, the recording medium in which the program is stored may be a non-transitory recording medium such as a CD-ROM.

Also, the recording medium also includes an internal or external recording medium that can be accessed from a distribution server to deliver the program. In addition, a configuration in which the program is divided into a plurality of pieces, each of which is downloaded at a different time, and then combined with each component of the controller 11 may be used, and the distribution servers delivering the divided pieces of the program may be different. Furthermore, the "computer-readable recording medium" includes a medium that stores a program for a certain period of time such as a volatile memory (RAM) inside a computer system serving as a server or client in a case in which programs are transmitted via a network. Also, the above-described program may be a program for realizing some of the functions described above. Furthermore, the program may be a so-called differential file (differential program) that can realize the above-described functions in combination with a program already recorded in the computer system.

Reference Signs List

1 Steering wheel
2 Steering shaft
4 Steering angle sensor
5 Torque sensor
6 Motor
8 Vehicle speed sensor
11 Controller
22 Target steering torque setter
23 Torque feedback calculator
32 First torque calculator
33 Second torque calculator
34, 35 Modulator
35a Vehicle speed-sensitive gain map
36a First torque map
37a Second torque map
VE Vehicle
PS Electric power steering device

**Claims**

1. A steering control device comprising:

a target steering torque setter configured to set a target steering torque with respect to a steering system; and
a steering torque controller configured to control a steering assist torque required to cause a steering torque to follow the target steering torque based on a deviation between the target steering torque and the steering torque acting on the steering system, wherein
the target steering torque setter sets:

the target steering torque based on the steering torque and the steering assist torque when a vehicle is in a stopped state;
the target steering torque based on the steering torque, the steering assist torque, a steering angle of the steering system, and a vehicle speed in a first vehicle speed range; and
the target steering torque based on the steering angle and the vehicle speed in a second vehicle speed range.

2. The steering control device according to claim 1, wherein
the target steering torque setter includes:

a first torque calculator configured to calculate a first torque based on a sum of the steering torque and the steering assist torque;
a second torque calculator configured to calculate a second torque based on the steering angle and the vehicle speed; and
a modulator configured to calculate the first torque as the target steering torque when the vehicle is in a stopped state, and calculating the target steering torque based on the first torque, the second torque, and the vehicle speed when the vehicle is not in a stopped state.

3. The steering control device according to claim 2, wherein
the first torque calculated by the first torque calculator has a gradual-increasing characteristic with an increase in as an absolute value of the sum of the steering torque and the steering assist torque.

4. The steering control device according to claim 2 or 3, wherein
the second torque calculated by the second torque calculator has: a non-decreasing characteristic with an increase in the vehicle speed when an absolute value of the steering angle is the same; and a non-decreasing characteristic with an increase in the absolute value of the steering angle when the vehicle speed is the same.

5. The steering control device according to any one of claims 2 to 4, wherein

the modulator

includes a vehicle speed-sensitive gain map in which a vehicle speed-sensitive gain corresponding to the vehicle speed is defined, and
calculates:

a post-modulation first torque by multiplying the vehicle speed-sensitive gain by the first torque;
a post-modulation second torque by multiplying a value obtained by subtracting the vehicle speed-sensitive gain from 1 by the second torque; and
the target steering torque by adding the post-modulation first torque and the post-modulation second torque, and wherein

the vehicle speed-sensitive gain map has a configuration in which:

the vehicle speed-sensitive gain is defined such that the post-modulation second torque becomes zero when the vehicle is in a stopped state; and
the vehicle speed-sensitive gain is defined such that the post-modulation first torque becomes zero in the second vehicle speed range.

6. The steering control device according to claim 5, wherein
the vehicle speed-sensitive gain map is defined such that the vehicle speed-sensitive gain continuously changes according to the vehicle speed.

7. The steering control device according to claim 1, wherein

the target steering torque setter includes:

a first torque map in which a relationship between the vehicle speed, the road surface reaction force estimated value, and a first map torque is defined; and
a second torque map in which a relationship between the vehicle speed, the steering angle, and a second map torque is defined,
obtains a first map torque based on the vehicle speed and the road surface reaction force estimated value obtained from a sum of the steering torque and the steering assist torque by referring to the first torque map,
obtains a second map torque based on the steering angle and the vehicle speed by referring to the second torque map, and
calculates the target steering torque by adding the first map torque and the second map torque, and wherein

the second torque map is defined such that the second map torque is zero when the vehicle is in a stopped state, and
the first torque map is set such that the first map torque is zero in the second vehicle speed range.

8. The steering control device according to claim 7, wherein
the first torque map has a characteristic in which:

the first map torque does not increase as the vehicle speed increases when the sum of the steering torque and the steering assist torque is the same; and

the first map torque does not decrease as an absolute value of the sum of the steering torque and the steering assist torque increases when the vehicle speed is the same.

9. The steering control device according to claim 7 or 8, wherein

the second torque map has a characteristic in which:

the second map torque does not decrease as the vehicle speed increases when an absolute value of the steering angle is the same; and

the second map torque does not decrease as the absolute value of the steering angle increases when the vehicle speed is the same.

10. An electric power steering device comprising:

a steering torque detector configured to detect a steering torque acting on a steering system;

a steering state detector configured to detect a steering angle of the steering system;

a motor configured to apply a steering assist torque to the steering system; and

a steering control device according to any one of claims 1 to 9 configured to control driving of the motor based on the detected steering torque and steering angle.

11. A vehicle comprising:

a vehicle speed detector configured to detect a speed of a vehicle; and

an electric power steering device according to claim 10 configured to control the steering assist torque applied to the steering system based on the vehicle speed detected by the vehicle speed detector.

FIG. 1

VE

PS

CONTROLLER

11

8

9

10

1

4

5

2

7

6

3

3

EP 4 722 080 A1

FIG. 2

# FIG. 3

Block diagram of TARGET STEERING TORQUE SETTER (22).

Inputs: STEERING TORQUE, STEERING ASSIST TORQUE, VEHICLE SPEED, STEERING ANGLE.

STEERING TORQUE and STEERING ASSIST TORQUE are summed at adder (31) with + and + inputs, producing ROAD SURFACE REACTION FORCE ESTIMATED VALUE, which feeds FIRST TORQUE CALCULATOR (32), outputting FIRST TORQUE to MODULATOR (34).

VEHICLE SPEED feeds MODULATOR (34) and also SECOND TORQUE CALCULATOR (33). STEERING ANGLE feeds SECOND TORQUE CALCULATOR (33), outputting SECOND TORQUE to MODULATOR (34).

MODULATOR (34) outputs TARGET STEERING TORQUE.

EP 4 722 080 A1

## FIG. 4A

FIRST TORQUE CALCULATOR — 32

32b SIGN DETERMINATION PART

ROAD SURFACE REACTION FORCE ESTIMATION PART

32a FIRST TORQUE CALCULATION PART

32c

FIRST TORQUE

## FIG. 4B

FIRST TORQUE CALCULATOR — 32

ROAD SURFACE REACTION FORCE ESTIMATION PART

32a FIRST TORQUE CALCULATION PART

FIRST TORQUE

## FIG. 5

FIRST TORQUE

0  |ROAD SURFACE REACTION FORCE ESTIMATED VALUE|

# FIG. 6A

# FIG. 6B

# FIG. 7

# FIG. 8

# FIG. 9

# FIG. 10

EP 4 722 080 A1

FIG. 11

FIG. 12

EP 4 722 080 A1

## FIG. 13A

## FIG. 13B

## FIG. 14A

## FIG. 14B

FIG. 15

## INTERNATIONAL SEARCH REPORT

International application No.

**PCT/JP2023/019435**

**A. CLASSIFICATION OF SUBJECT MATTER**

***B62D 6/00***(2006.01)i; *B62D 101/00*(2006.01)n; *B62D 113/00*(2006.01)n; *B62D 119/00*(2006.01)n
FI:   B62D6/00; B62D101:00; B62D113:00; B62D119:00

According to International Patent Classification (IPC) or to both national classification and IPC

**B. FIELDS SEARCHED**

Minimum documentation searched (classification system followed by classification symbols)

B62D5/04,6/00,15/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 4161707 B2 (JTEKT CORP.) 08 October 2008 (2008-10-08) | 1-11 |
| A | JP 2021-31054 A (NSK LTD.) 01 March 2021 (2021-03-01) | 1-11 |
| A | JP 2013-203238 A (TOYOTA JIDOSHA KABUSHIKI KAISHA) 07 October 2013 (2013-10-07) | 1-11 |

☐ Further documents are listed in the continuation of Box C.      ☑ See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **08 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/019435**

| Patent document cited in search report | | | Publication date (day/month/year) | Patent family member(s) | Publication date (day/month/year) |
|---|---|---|---|---|---|
| JP | 4161707 | B2 | 08 October 2008 | (Family: none) | |
| JP | 2021-31054 | A | 01 March 2021 | (Family: none) | |
| JP | 2013-203238 | A | 07 October 2013 | (Family: none) | |

Form PCT/ISA/210 (patent family annex) (January 2015)

**EP 4 722 080 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6504322 B
- JP 4161707 B